# EUROPEAN PATENT SPECIFICATION

(11) **EP 0 898 880 B1**
(45) Date of publication and mention of the grant of the patent: **05.03.2003**
(21) Application number: 98202791.4
(22) Date of filing: 20.08.1998
(51) Int. Cl.: A01K 1/00

(54) **An implement for passing in predetermined directions of separate groups of animals from one area to an other**
Vorrichtung zur gerichteten Zulassung von gesonderten Tiergruppen von einem Gebiet in ein anderes Gebiet
Dispositif pour permettre des groupes séparés d'animaux de passer dans une orientation prédeterminée d'un territoire à un autre

(30) Priority: 28.08.1997 NL 1006869
(43) Date of publication of application: 03.03.1999
(73) Proprietor: MAASLAND N.V., 3155 PD Maasland (NL)
(72) Inventor: Verburg, Carlo, 2641 NG Pijnacker (NL)
(74) Representative: Corten, Maurice Jean F.M.

(56) References cited:
- EP-A- 0 582 350
- AU-A- 7 655 274
- FR-A- 619 796
- GB-A- 227 591
- NL-A- 9 201 969
- US-A- 4 261 297
- US-A- 4 535 723

## Description

The invention relates to an implement for passing a first group of animals in a first direction from a first area to a second area according to the preamble of claim 1.

Such an implement is known from GB-C-227,591.

The invention aims at providing an alternative implement suitable for controlling the movement of two groups of animals, which are separated from each other.

For that purpose the implement of the sort as defined above comprises according to the invention the features of the characterizing part of claim 1.

In what follows the invention will be further explained on the basis of non-restricting exemplary embodiments and with reference to the accompanying drawings.
Figure 1 is a plan view of a first embodiment of the implement according to the invention;
Figure 2 is a detailed view of Figure 1;
Figure 3 is a view according to the arrow III in Figure 2;
Figure 4 is a view according to the arrow IV in Figure 3;
Figure 5 is a view corresponding to that of Figure 1 of an alternative embodiment; and
Figure 6 is a view corresponding to that of Figure 2 of another alternative embodiment.

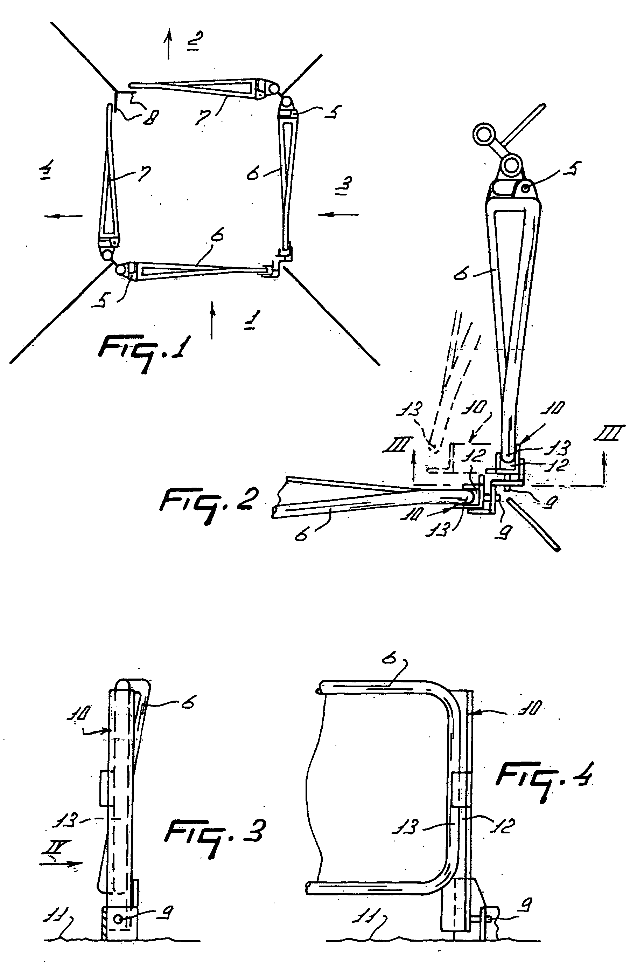

The implement shown in Figure 1 has for its object to pass e.g. a first group of animals from area 1 to area 2 and to pass a second group of animals from area 3 to area 4, whilst excluding the possibility that animals belonging to one group join the other group. It will be obvious that it is possible for the animals to pass the implement e.g. at random intervals, one by one or in an almost continuous stream of animals. The implement is provided with pivoting gates 6, 7 which are capable of pivoting about respective upwardly orientated pivot shafts 5. Two pivot shafts 5 are each time located in a common angular point of the arrangement of the pivoting gates, which arrangement, seen in plan view, is substantially rectangular. These pivot shafts may also be integrated so as to form one common pivot shaft for two pivoting gates. The pivoting gates 6, 7 can only pivot from the shown closed position in the direction of the respective arrow. A pivoting movement in the opposite direction from the shown closed position is impeded by suitable stopping and/or blocking means, here constituted by stops 8. The pivoting gates are repelled to their shown closed position by means known per se to the man skilled in the art, which means may be based on spring action or gravity, and in the latter case be constituted e.g. by a key guided in an obliquely upwardly extending groove or an obliquely positioned pivot shaft, which embodiment is visible in Figure 2.

In plan view, the pivoting gates 6, 7 have substantially the same size. Each pivoting gate 6 can be opened by a pivoting movement substantially maximally until a respective pivoting gate 7. A further pivoting movement is impeded by stopping means, here again by the stops 8. By opening a pivoting gate 6 the passage via the adjacent pivoting gate 7 is blocked automatically. By adapting the size of the pivoting gates to the animals for which the implement is intended, it is ensured that a pivoting gate 6 has to be opened substantially completely for the passage of a group of animals, so that the passage through the adjacent pivoting gate 7 is blocked automatically. Besides, in another manner it can also be ensured that, as soon as a pivoting gate 6 is opened, the adjacent pivoting gate 7 is blocked in its closed position.

Releasing blocking means act on the pivoting gates 6, which releasing blocking means, upon opening of one pivoting gate 6, block an other in its closed position. A first embodiment of these blocking means is shown in Figures 2 to 4 and comprises a blocking beam 10 extending upwardly over a considerable height of preferably at least half the height of the pivoting gate 6, which blocking beam 10 is pivotable about a pivot shaft 9 located near the ground 11 and extending at least substantially horizontally. This beam 10 comprises an engaging element, here constituted by a space 12 which is open at one side, for engaging a part of the pivoting gate 6, here constituted by the upwardly extending portion 13 of the respective pivoting gate 6, when the pivoting gate 6 is entirely or almost entirely closed. This recess 12 preferably only extends over a relatively small part of the height of the pivoting gate 6. Upon opening of the respective pivoting gate, the beam 10 is taken along over a limited angle of pivoting, until the upwardly extending portion 13 is free from the recess 12. In this manner the beam 10 assumes the position shown in interrupted lines in Figure 2, so that the pivoting movement of the other pivoting gate 6 is blocked.

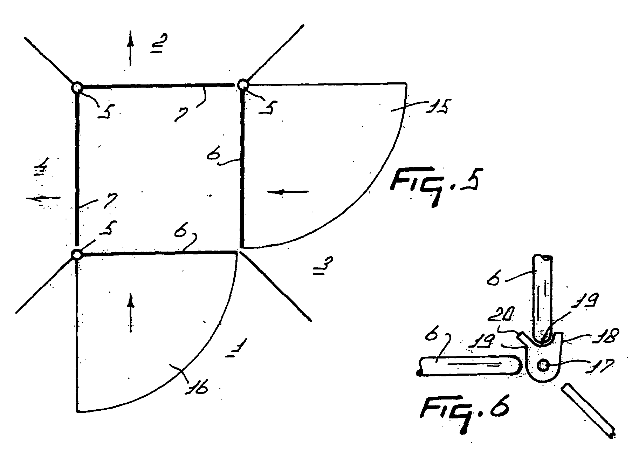

A second embodiment of these blocking means is shown in Figure 5. These blocking means comprise a blocking element 15 preferably extending at least substantially parallel to the pivot shaft 5 of the respective pivoting gate 6, which blocking element 15, seen in plan view, has the shape of a segment of a circle and pivots along with one pivoting gate 6, and a similar blocking element 16 which pivots along with the other pivoting gate 6. The size of the element 15, 16 and the mutual arrangement of the element 15, 16 and the respective pivoting gate 6 are such that only when one pivoting gate 6 is opened, the element 15 cooperates in a blocking manner with the other pivoting gate 6. For example, an element 15, 16 engages an upper edge region of the respective pivoting gate 6 in such a manner that the cows can walk under an element 15, 16. The element 15, 16 may also be replaced by a beam element that is pivotable about the same pivot shaft, which beam element, like the blocking beam 10 of Figure 2, pivots from its closed position over a limited angle along with the respective pivoting gate and, when the pivoting gate 6 is opened sufficiently far, engages with its free end the other pivoting gate.

A third embodiment of these blocking means is shown in Figure 6. These blocking means comprise a preferably plate-like locking member 18 which is rotatable about an upwardly orientated pivot shaft 17 and which is provided with an engaging element for each pivoting gate 6, which engaging element is constituted in this situation by a lug 20 with a recess 19. The recesses 19 define the shape of the lug 20 whose legs extend so far that, when the two pivoting gates 6 open at the same time by a pivoting movement, they are both stopped by said lug 20. When only one pivoting gate 6 is opened by a pivoting movement, then, by pushing against the lug 20, the member 18 is rotated so that the lug 20 allows said pivoting gate to pass (represented imaginarily).

## Claims

1. An implement for passing a first group of animals in a first direction from a first area (1) to a second area (2), which implement comprises means for providing a passage in the first direction and for blocking the passage in the direction opposite to the first direction, the means being designed for providing a passage for a second group of animals being separated from the first group of animals in a second direction from a third area (3) to a fourth area (4) and for blocking the passage in the direction opposite to the second direction, said second direction crossing the first direction, while the means further prevent the first group of animals from passing in the second direction and the direction opposite thereto and the second group of animals from passing in the first direction and the direction opposite thereto, said means comprising a first gate (6), such as a pivoting gate, arranged between the first and the second area, which, in its closed position, blocks the passage of the first group of animals and can be opened exclusively in the first direction, while the first gate (6), in its opened position, blocks the passage of the second group of animals, said means comprising a second gate (6), such as a pivoting gate, arranged between the third and the fourth area, which, in its closed position, blocks the passage of the second group of animals and can be opened exclusively in the second direction, while the second gate (6), in its opened position, blocks the passage of the first group of animals, **characterized in that** the implement comprises releasing blocking means acting on the pivoting gates (6), which releasing blocking means, upon opening of one pivoting gate (6), block the other one in its closed position.

2. Implement as claimed in claim 1, **characterized in that** the releasing blocking means comprises a blocking beam (10).

3. Implement as claimed in claim 2, **characterized in that** the blocking beam (10) extends upwardly.

4. Implement as claimed in claim 3, **characterized in that** the blocking beam (10) extends upwardly over at least half the height of the pivoting gate (6).

5. Implement as claimed in claim 2, 3 or 4, **characterized in that** said blocking beam (10) is pivotable about a pivot shaft (9) located near the ground (11) and extending at least substantially horizontally.

6. Implement as claimed in claim 2, 3, 4 or 5, **characterized in that** said blocking beam (10) comprises an engaging element (12) for engaging a part of the pivoting gate (6).

7. Implement as claimed in claim 1, **characterized in that** the releasing blocking means comprise a blocking element (15) which, seen in plan view, has the shape of a segment of a circle and pivots along with one pivoting gate (6), and a similar blocking element (16) which pivots along with the other pivoting gate (6).

8. Implement as claimed in claim 7, **characterized in that** the blocking element (15) extends at least substantially parallel to the pivot shaft (5) of the respective pivoting gate (6).

9. Implement as claimed in claim 1, **characterized in that** said releasing blocking means comprise a plate-like locking member (18) which is rotatable about an upwardly orientated pivot shaft (17) and which is provided with an engaging element for each pivoting gate (6).

10. Implement as claimed in claim 9, **characterized in that** said engaging element is constituted by a lug (20) with a recess (19).

11. Implement as claimed in claim 10, **characterized in that** the recesses (19) define the shape of the lug (20) whose legs extend so far that, when the two pivoting gates (6) open at the same time by a pivoting movement, they are both stopped by said lug (20).

## Patentansprüche

1. Vorrichtung zum Leiten einer ersten Gruppe von Tieren in einer ersten Richtung von einem ersten Bereich (1) in einen zweiten Bereich (2), wobei die Vorrichtung Mittel umfaßt, um einen Durchgang in der ersten Richtung zu bilden und den Durchgang in der zu der ersten Richtung entgegengesetzten Richtung zu sperren, wobei die Mittel dazu ausgebildet sind, einen Durchgang für eine von der ersten Gruppe von Tieren getrennte zweite Gruppe von Tieren in einer zweiten Richtung von einem dritten Bereich (3) in einen vierten Bereich (4) zu bilden und den Durchgang in der zu der zweiten Richtung entgegengesetzten Richtung zu sperren, wobei die zweite Richtung die erste Richtung kreuzt, wobei die Mittel ferner verhindern, daß sich die erste Gruppe von Tieren in die zweite Richtung und in die zu dieser entgegengesetzte Richtung und die zweite Gruppe von Tieren in die erste Richtung und in die zu dieser entgegengesetzte Richtung bewegt, wobei die Mittel eine erste Tür (6), wie z. B. eine Schwenktür, umfassen, die zwischen dem ersten und dem zweiten Bereich angeordnet ist, die in ihrer geschlossenen Position den Durchgang für die erste Gruppe von Tieren sperrt und ausschließlich in der ersten Richtung geöffnet werden kann, wobei die erste Tür (6) in ihrer geöffneten Position den Durchgang für die zweite Gruppe von Tieren sperrt, wobei die Mittel eine zweite Tür (6), wie z. B. eine Schwenktür, umfassen, die zwischen dem dritten und dem vierten Bereich angeordnet ist, die in ihrer geschlossenen Position den Durchgang für die zweite Gruppe von Tieren sperrt und ausschließlich in der zweiten Richtung geöffnet werden kann, wobei die zweite Tür (6) in ihrer geöffneten Position den Durchgang für die erste Gruppe von Tieren sperrt,
**dadurch gekennzeichnet, daß** die Vorrichtung Sperrauslösevorrichtungen umfaßt, die auf die Schwenktüren (6) wirken, wobei die Sperrauslösevorrichtungen beim Öffnen einer Schwenktür (6) die andere in ihrer geschlossenen Position festlegen.

2. Vorrichtung nach Anspruch 1,
**dadurch gekennzeichnet, daß** die Sperrauslösevorrichtungen eine Sperrstange (10) umfassen.

3. Vorrichtung nach Anspruch 2,
**dadurch gekennzeichnet, daß** sich die Sperrstange (10) nach oben erstreckt.

4. Vorrichtung nach Anspruch 3,
**dadurch gekennzeichnet, daß** sich die Sperrstange (10) über mindestens die halbe Höhe der Schwenktür (6) nach oben erstreckt.

5. Vorrichtung nach Anspruch 2, 3 oder 4,
**dadurch gekennzeichnet, daß** die Sperrstange (10) um eine Schwenkachse (9) schwenkbar ist, die nahe dem Boden (11) angeordnet ist und sich zumindest im wesentlichen horizontal erstreckt.

6. Vorrichtung nach Anspruch 2, 3, 4 oder 5,
**dadurch gekennzeichnet, daß** die Blockierstange (10) ein Eingriffselement (12) zum Eingreifen eines Teils der Schwenktür (6) umfaßt.

7. Vorrichtung nach Anspruch 1,
**dadurch gekennzeichnet, daß** die Sperrauslösevorrichtungen ein Sperrelement (15), das in Draufsicht gesehen die Form eines Kreissegments hat und zusammen mit einer Schwenktür (6) verschwenkt wird, sowie ein gleich ausgebildetes Sperrelement (16) umfassen, das zusammen mit der anderen Schwenktür (6) verschwenkt wird.

8. Vorrichtung nach Anspruch 7,
**dadurch gekennzeichnet, daß** sich das Sperrelement (15) zumindest im wesentlichen parallel zu der Schwenkachse (5) der entsprechenden Schwenktür (6) erstreckt.

9. Vorrichtung nach Anspruch 1,
**dadurch gekennzeichnet, daß** die Sperrauslösevorrichtungen ein plattenartiges Verriegelungsglied (18) umfassen, das um eine aufwärts gerichtete Schwenkachse (17) drehbar und mit einem Eingriffselement für jede Schwenktür (6) versehen ist.

10. Vorrichtung nach Anspruch 9,
**dadurch gekennzeichnet, daß** das Eingriffselement durch einen Ansatz (20) mit einer Ausnehmung (19) gebildet ist.

11. Vorrichtung nach Anspruch 10,
**dadurch gekennzeichnet, daß** die Ausnehmungen (19) die Form des Ansatzes (20) definieren, dessen Schenkel sich so weit erstrecken, daß die beiden Schwenktüren (6) von dem Ansatz (20) gestoppt werden, wenn sie sich durch eine Schwenkbewegung gleichzeitig öffnen.

## Revendications

1. Dispositif pour faire passer un premier groupe d'animaux selon une première direction un premier secteur (1) à un deuxième secteur (2), lequel dispositif comprend un moyen pour fournir un passage selon la première direction et pour bloquer le passage selon la direction opposée à la première direction, le moyen étant conçu pour fournir un passage pour un deuxième groupe d'animaux séparé d u premier groupe d'animaux selon une deuxième direction d'un troisième secteur (3) à un quatrième secteur (4) et pour bloquer le passage dans la direction opposée à la deuxième direction, ladite deuxième direction croisant la première direction, tandis que le moyen empêche en outre le premier groupe d'animaux de passer dans la deuxième direction et la direction opposée à celle-ci et le deuxième groupe d'animaux de passer dans la première direction et la direction opposée à celle-ci, ledit moyen comprenant une première barrière (6), telle qu'une barrière pivotante, arrangée entre le premier et le deuxième secteurs, qui, en position fermée, bloque le passage du premier groupe d'animaux et peut être ouverte exclusivement dans la première direction, alors que la première barrière (6), dans sa position ouverte, bloque le passage du deuxième groupe d'animaux, ledit moyen comprenant une deuxième barrière (6), telle qu'une barrière pivotante, prévue entre le troisième et le quatrième secteurs, qui, dans sa position fermée, bloque le passage du deuxième groupe d'animaux et peut être ouverte exclusivement dans la deuxième direction, alors que la deuxième barrière (6), dans sa position ouverte, bloque le passage du premier groupe d'animaux, **caractérisé en ce que** le dispositif comprend un moyen pour libérer le blocage agissant sur les barrières pivotantes (6), lequel moyen pour libérer le blocage, à l'ouverture de l'une des barrières pivotantes (6), bloque l'autre dans sa position fermée.

2. Dispositif selon la revendication 1, **caractérisé en ce que** le moyen pour libérer le blocage comprend une poutre de blocage (10).

3. Dispositif selon la revendication 2, **caractérisé en ce que** la poutre de blocage (10) s'étend dans le sens de la hauteur.

4. Dispositif selon la revendication 3, **caractérisé en ce que** la poutre de blocage (10) s'étend dans le sens de la hauteur au-dessus au moins de la moitié de la hauteur de la barrière pivotante (6).

5. Dispositif selon la revendication 2, 3 ou 4, **caractérisé en ce que** ladite poutre de blocage (10) pivote autour d'un axe d'articulation (9) situé près du sol (11) et s'étendant au moins substantiellement de manière horizontale.

6. Dispositif selon la revendication 2, 3, 4 ou 5, **caractérisé en ce que** ladite poutre de blocage (10) comprend un élément d'engagement (12) pour engager une partie de la barrière pivotante (6).

7. Dispositif selon la revendication 1, **caractérisé en ce que** le moyen de libération du blocage comprend un élément de blocage (15) qui, vu de dessus, a la forme d'un segment de cercle et qui pivote avec une barrière pivotante (6), et un élément de blocage identique (16) qui pivote avec l'autre barrière pivotante (6).

8. Dispositif selon la revendication 7, **caractérisé en ce que** l'élément de blocage (15) s'étend au moins substantiellement en parallèle à l'axe d'articulation (5) de la barrière pivotante correspondante (6).

9. Dispositif selon la revendication 1, **caractérisé en ce que** ledit moyen de libération du blocage comprend un élément de fermeture lamellaire (18) qui tourne autour d'un axe d'articulation orienté vers le haut (17) et qui est fourni avec un élément d'engagement pour chaque barrière pivotante (6).

10. Dispositif selon la revendication 9, **caractérisé en ce que** ledit élément d'engagement est constitué par une saillie (20) avec un évidement (19).

11. Dispositif selon la revendication 10, **caractérisé en ce que** les évidements (19) déterminent la forme de la saillie (20) dont les montants s'étendent aussi loin de sorte que, lorsque les deux barrières pivotantes (6) s'ouvrent en même temps par un mouvement de pivot, elles sont toutes les deux stoppées par ladite saillie (20).
